## Europäisches Patentamt
## European Patent Office
## Office européen des brevets

(19)

(11) Numéro de publication : **0 161 620**
**B1**

(12) # FASCICULE DE BREVET EUROPÉEN

(45) Date de publication du fascicule du brevet :
28.09.88

(51) Int. Cl.⁴ : **H 02 H 7/00, H 02 J 3/18**

(21) Numéro de dépôt : 85105551.7

(22) Date de dépôt : 07.05.85

(54) **Dispositif pour élaborer un signal indicatif d'un defaut survenant dans un circuit éléctrique branché sur le réseau.**

(30) Priorité : 10.05.84 FR 8407208

(43) Date de publication de la demande :
21.11.85 Bulletin 85/47

(45) Mention de la délivrance du brevet :
28.09.88 Bulletin 88/39

(84) Etats contractants désignés :
**CH DE GB IT LI SE**

(56) Documents cités :
**DE-A- 2 929 542**
**US-A- 3 989 999**
**US-A- 4 398 141**

(73) Titulaire : **CGEE ALSTHOM Société anonyme dite:**
**13, rue Antonin Raynaud**
**F-92309 Levallois-Perret (FR)**

(72) Inventeur : **Charles, Patrick**
**28 avenue de la Charbonnière**
**F-78124 Mareil Sur Mauldre (FR)**

(74) Mandataire : **Weinmiller, Jürgen et al**
**Lennéstrasse 9 Postfach 24**
**D-8133 Feldafing (DE)**

## Description

La présente invention concerne un dispositif pour élaborer un signal indicatif d'un défaut survenant dans un circuit électrique branché sur le réseau.

En particulier, l'invention s'applique pour la protection de dispositifs de compensation de puissance réactive branchés sur le réseau et comportant des bobines d'inductance alimentées à travers des interrupteurs statiques à thyristors.

Un dispositif connu de la publication DE-A-2 929 542 comprend deux transformateurs d'intensité situés respectivement aux extrémités du circuit à protéger. La tension secondaire de ces transformateurs d'intensité est respectivement envoyée sur deux entrées d'un relais différentiel.

Un signal, en sortie de ce relais indique un défaut situé entre les deux transformateurs d'intensité, entre le circuit et la terre, dont le courant est proportionnel à ce signal.

Un tel dispositif ne permet pas la détection de défauts à l'intérieur du circuit lui-même tel qu'un court-circuit entre spires de la bobine d'inductance ou un fonctionnement anormal dû à l'amorçage involontaire ou au non amorçage des thyristors de l'interrupteur statique alimentant la bobine d'inductance.

La présente invention a pour but de pallier ces inconvénients et a pour objet un dispositif pour élaborer un signal indicatif d'un défaut survenant dans un circuit électrique branché sur le réseau et comportant en série au moins une bobine d'inductance et un interrupteur statique bidirectionnel à thyristors commandés par des impulsions θ, l'impédance capacitive et l'impédance résistive dudit circuit étant négligeables vis-à-vis de son impédance inductive L, dispositif comportant un relais différentiel recevant en entrée un premier signal et un second signal et fournissant en sortie un signal de défaut en cas d'inégalité des deux dits signaux, le premier signal étant un signal image du courant dudit circuit provenant du secondaire d'un transformateur d'intensité monté dans ledit circuit, caractérisé en ce que ledit second signal est un signal image du courant dudit circuit, réalisé par un circuit d'élaboration dudit signal en fonction de ladite valeur de l'impédance L et recevant en entrée d'une part la tension secondaire u d'un transformateur de potentiel branché aux bornes dudit circuit et d'autre part, lesdites impulsions d'amorçage θ, les transformateurs de potentiel et d'intensité étant calculés de façon à ce que les deux dits signaux représentent des images, dans le même rapport, du courant dudit circuit.

Selon une réalisation particulière, ledit circuit d'élaboration du signal image dudit courant comprend d'une part un circuit intégrateur, de gain 1/L, recevant en entrée ladite tension secondaire u et dont la sortie est ledit second signal envoyé audit relais différentiel et d'autre part un circuit d'élaboration d'un signal de remise à zéro dudit circuit intégrateur comprenant un détecteur de seuil positif et un détecteur de seuil négatif reliés en parallèle à la sortie dudit circuit intégrateur, la sortie du détecteur de seuil positif étant reliée à l'entrée R d'une première bascule du type RS et la sortie du détecteur de seuil négatif étant reliée à l'entrée R d'une seconde bascule du type RS, l'entrée S de chaque bascule recevant lesdites impulsions θ et la sortie Q de chaque bascule étant reliée respectivement à l'une et à l'autre des deux entrées d'un circuit logique NI dont la sortie est reliée à une entrée de remise à zéro dudit circuit intégrateur.

On va maintenant donner la description d'un exemple de réalisation de l'invention, faite ci-après en référence au dessin annexé dans lequel :

La figure 1 est une représentation schématique d'un dispositif de compensation triphasé à bobines d'inductance, alimentées à travers des interrupteurs statiques à thyristors montrant, pour l'une des trois branches du dispositif de compensation, un dispositif connu d'élaboration d'un signal de défaut dans ladite branche.

La figure 2 est une représentation graphique de la tension aux bornes de ladite branche et du courant dans la branche.

La figure 3 est un schéma montrant, appliqué à une branche d'un dispositif de compensation, le dispositif d'élaboration d'un signal indicatif de défaut selon l'invention.

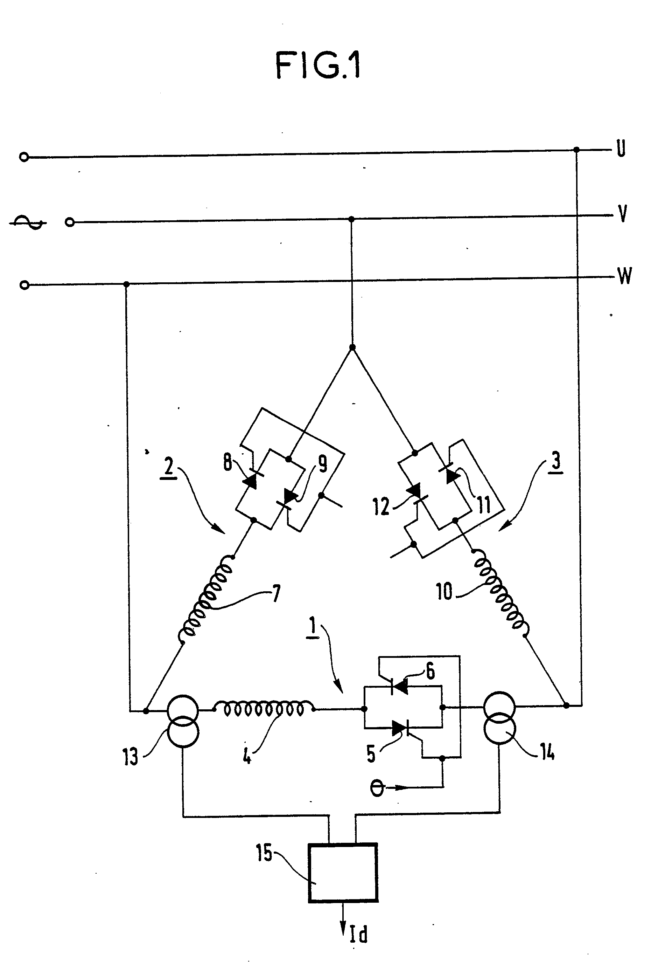

La figure 1 montre donc un dispositif de compensation triphasé comportant trois branches 1, 2 et 3 montées en triangle et branchées en parallèle sur les lignes U, V, W d'un réseau de transport d'énergie électrique.

La branche 1 comporte une bobine d'inductance 4 d'impédance L alimentée à travers un interrupteur statique bidirectionnel à thyristors 5 et 6 commandés par des impulsions d'amorçage θ. De même, la branche 2 comprend une bobine d'inductance 7 alimentée à travers un interrupteur statique à thyristors 8 et 9 et la branche 3 comprend une bobine d'inductance 10 alimentée à travers un interrupteur statique à thyristors 11 et 12.

Sur l'une des branches : la branche 1, on a représenté un dispositif connu permettant d'obtenir un signal indicatif d'un défaut entre la branche et la terre. Ce dispositif comporte un premier transformateur d'intensité 13 situé à une extrémité de la branche 1 et un second transformateur d'intensité 14 situé à l'autre extrémité de la branche. La tension secondaire issue de chacun de ces transformateurs d'intensité est envoyée vers un relais différentiel 15 qui donne en sortie un signal différentiel Id proportionnel au courant de fuite s'écoulant à la terre.

Ce signal peut ensuite être utilisé soit comme signal de commande d'une alarme, soit comme signal de commande d'ouverture d'un disjoncteur de protection.

Ainsi qu'on peut le comprendre, un tel dispositif indique une différence d'intensité entre les cou-

rants I1 et I2 mesurés respectivement par les transformateurs d'intensité 13 et 14 et indique par conséquent un défaut situé entre ces deux transformateurs, défaut entre la branche 1 et la terre. Par contre, un tel dispositif ne donne aucune indication sur un éventuel défaut dans les éléments eux-mêmes de la branche tel qu'un court-circuit entre spires de la bobine 4 ou un mauvais fonctionnement de l'interrupteur statique par rapport aux ordres d'amorçage θ : soit qu'il y ait amorçage sans impulsion θ, soit une absence d'amorçage malgré l'arrivée d'une impulsion θ.

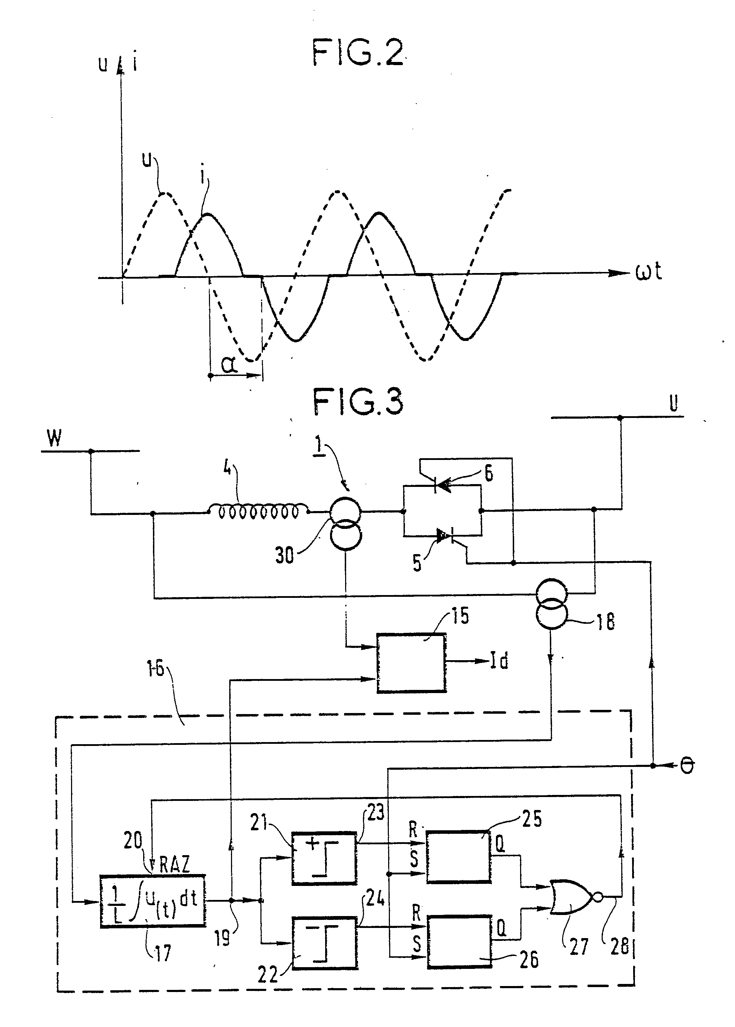

La figure 2 donne une représentation graphique de la tension u aux bornes de la branche 1 et du courant i, en l'absence de défaut, dans la branche. α indique l'angle d'amorçage des thyristors. La variation de cet angle α permet de faire varier, selon les besoins de compensation de la ligne, le courant dans la bobine d'inductance.

La figure 3 représente le dispositif selon l'invention appliqué à la branche 1 de la figure 1. Il peut, bien entendu, être appliqué aux autres branches 2 et 3 comme à tout circuit électrique branché sur le réseau, comportant une bobine d'inductance alimentée par l'intermédiaire d'un interrupteur statique bidirectionnel à thyristors et dont les impédances capacitives et résistives sont négligeables par rapport à l'impédance L de la bobine.

Le dispositif comprend un transformateur d'intensité 30 monté en un point quelconque de la branche 1. La tension secondaire de ce transformateur d'intensité est envoyée comme premier signal sur une entrée du relais différentiel 15.

Le dispositif comporte en outre un circuit 16 d'élaboration d'un second signal envoyé sur une seconde entrée du relais différentiel 15.

Ce second signal, comme le premier, est un signal image du courant i circulant dans la branche 1. Cependant, alors que pour le premier signal, il s'agit d'une image du courant réel circulant dans la branche 1 fournie par un transformateur d'intensité 30, il s'agit pour ce second signal, d'un signal image du courant théorique, calculé en fonction de la valeur de l'impédance L de la bobine d'inductance 4.

Ce circuit comprend un circuit intégrateur 17 de gain $G = 1/L$ recevant en entrée l'image u de la tension aux bornes de la branche 1 donnée par un transformateur de potentiel 18. La sortie 19 de cet intégrateur 17 donne un signal image du courant calculé par intégration de la tension d'alimentation pendant la durée prévue de conduction de l'interrupteur statique comportant les thyristors 5 et 6. Pour cela, le circuit intégrateur est associé à un circuit d'élaboration d'un signal de remise à zéro du circuit intégrateur. Ce signal est envoyé sur une entrée 20 de remise à zéro du circuit intégrateur.

Le circuit d'élaboration d'un signal de remise à zéro de l'intégrateur comprend un détecteur de seuil positif 21 et un détecteur de seuil négatif 22 reliés en parallèle sur la sortie 19 et dont les sorties respectives 23 et 24 sont respectivement reliées aux entrées R de bascules 25 et 26 de type RS appelés couramment « Flip-Flop RS ».

Les détecteurs de seuils positifs et négatifs 21 et 22 sont réglés pour une très faible tension ε respectivement positive et négative.

Les sorties Q des bascules 25 et 26 sont reliées aux deux entrées d'une porte logique NI 27 dont la sortie 28 est reliée à l'entrée 20 de remise à zéro de l'intégrateur 17. L'entrée S des bascules 25 et 26 est commandée par les impulsions θ d'amorçage des thyristors 5 et 6. On obtient ainsi en 19 le second signal envoyé sur le relais différentiel 15. Ce signal constitue bien une image du courant calculé dans la branche 1 compte tenu de la valeur de l'impédance L de la bobine 4 et compte tenu du temps prévu, en fonction des impulsions θ d'amorçage des thyristors 5 et 6, de conduction de l'interrupteur statique.

Le dispositif de remise à zéro de l'intégrateur fonctionne de la façon suivante : en l'absence de courant dans la bobine d'inductance 4, les sorties Q des bascules 25 et 26 ont la valeur binaire 0 et donc la sortie 28 de l'élément logique NI 27 à la valeur binaire 1 ce qui maintient l'intégrateur 17 à zéro jusqu'à l'arrivée d'une nouvelle impulsion θ qui, appliquée à l'entrée S des bascules 25 et 26 force leur sortie Q à la valeur binaire 1 et donc l'élément NI 27 à la valeur binaire 0 permettant de nouveau l'intégration de la tension $u_{(t)}$.

Afin de provoquer le retour à zéro de la sortie des deux bascules lors de l'annulation du courant dans la bobine 4, les détecteurs de seuils positif et négatif 21 et 22 ne sont pas réglés à zéro mais à une très faible valeur respectivement + ε et — ε.

Lorsque le relais différentiel donne un signal de sortie $I_d$, cela indique une différence entre le courant mesuré et le courant calculé et donc qu'il existe un défaut sur la branche 1.

Bien entendu, les transformateurs d'intensité 30 et de potentiel 18 sont calculés de telle façon que les deux signaux envoyés à l'entrée du relais différentiel 15 représentent des images, dans le même rapport, du courant dans la branche 1.

## Revendications

1. Dispositif pour élaborer un signal indicatif d'un défaut survenant dans un circuit électrique (1) branché sur le réseau (UW) et comportant en série au moins une bobine d'inductance (4) et un interrupteur statique bidirectionnel à thyristors (5, 6) commandés par des impulsions (θ), l'impédance capacitive et l'impédance résistive dudit circuit étant négligeables vis-à-vis de son impédance inductive L, dispositif comportant un relais différentiel (15) recevant en entrée un premier signal et un second signal et fournissant en sortie un signal de défaut ($I_d$) en cas d'inégalité des deux dits signaux, le premier signal étant un signal image du courant dudit circuit provenant du secondaire d'un transformateur d'intensité (30) monté dans ledit circuit, caractérisé en ce que ledit second signal est un signal image du courant dudit circuit, réalisé par un circuit (16) d'élaboration dudit signal en fonction de ladite valeur de l'impédance L et recevant en entrée d'une part la tension secondaire u d'un transformateur de potentiel (18) branché aux bornes dudit circuit (1) et d'autre part lesdites impulsions d'amorçage (θ), les transformateurs de potentiel (18) et d'intensité (30) étant calculés de façon à ce que les deux dits signaux représentent des images, dans le même rapport, du courant dudit circuit.

2. Dispositif selon la revendication 1, caractérisé en ce que ledit circuit (16) d'élaboration du signal image dudit courant comprend d'une part un circuit intégrateur (17) de gain 1/L recevant en entrée ladite tension secondaire u et dont la sortie (19) fournit ledit second signal envoyé audit relais différentiel (15) et d'autre part un circuit d'élaboration d'un signal de remise à zéro dudit circuit intégrateur comprenant un détecteur de seuil positif (21) et un détecteur de seuil négatif (22) reliés en parallèle à la sortie (19) dudit circuit intégrateur, la sortie (23) du détecteur de seuil positif étant reliée à l'entrée R d'une première bascule (25) du type RS, et la sortie (24) du détecteur de seuil négatif étant reliée à l'entrée R d'une seconde bascule (26) du type RS, l'entrée S de chaque bascule recevant lesdites impulsions (θ) et la sortie Q de chaque bascule étant reliée respectivement à l'une et à l'autre des deux entrées d'un circuit logique NI (27) dont la sortie (28) est reliée à une entrée (20) de remise à zéro dudit circuit intégrateur.

## Claims

1. An apparatus for generating a signal indicative of a fault occuring in an electric circuit (1) connected to the mains (UW), and comprising a series connection including at least one inductance winding (4) and a two-way static switch with thyristors (5, 6) which are controlled by pulses (θ), wherein the capacitive impedance and the resistive impedance of said circuit are negligible relative to its inductive impedance L, the apparatus comprising a differential relay (15) receiving first and second input signals and delivering an output signal ($I_d$) indicative of a fault when said input signals are unequal, the first signal being an image signal of the current in said circuit and supplied by the secondary winding of a current transformer (30) mounted in said circuit, characterized in that the second signal is an image signal of the current in said circuit established by a signal generating circuit (16) in accordance with the value of the impedance L, this circuit receiving at its input on the one hand the secondary voltage u of a voltage transformer (18) connected to the terminals of said circuit (1), and on the other hand the firing pulses (θ), the voltage (18) and current transformers (30) being scaled so that the two signals represent images to the same scale of the current of said circuit.

2. An apparatus according to claim 1, characterized in that said current image signal generator circuit (16) comprises, on the one hand, an integrator circuit (17) having a gain of 1/L, receiving at its input said secondary voltage u, delivering at its output (19) said second signal supplied to said differential relay (15), and on the other hand, a signal generating circuit for resetting the integrator circuit to zero, comprising a positive threshold detector (21) and a negative threshold detector (22) connected in parallel to the output (19) of said integrator circuit, the output (23) of the positive threshold detector being connected to the R input of a first bistable (25) of the RS type, and the output (24) of the negative threshold detector being connected to the R input of a second bistable (26) of the RS type, the S input of each bistable receiving said pulses (θ), and the output of each bistable being connected respectively to the one and to the other input of a logic NOR gate (27), the output (28) of which is connected to a zero resetting input (20) of said integrator circuit.

## Patentansprüche

1. Anordnung zur Erzeugung eines Signals zur Fehleranzeige in einem an das Netz (UW) angeschlossenen Schaltkreis (1), mit einer Reihenschaltung aus mindestens einer Spule (4) und einem statischen, von Impulsen θ gesteuerten Zweiwegeschalter mit Thyristoren (5, 6), wobei die kapazitive Impedanz und der ohm'sche Widerstand des Schaltkreises gegen seinen induktiven Widerstand L vernachlässigbar ist und die Einrichtung ein Differentialrelais (15) aufweist, das eingangsseitig ein erstes und ein zweites Signal zugeführt erhält und ausgangsseitig im Falle der Ungleichheit dieser beiden Signale ein Fehlersignal ($I_d$) liefert, wobei das erste Signal ein Abbildsignal des Stromes in der Sekundärwicklung eines Stromtransformators (30) in dem Schaltkreis ist, dadurch gekennzeichnet, daß das zweite Signal ein Abbildsignal des Stromes des Schaltkreises ist, welches von einem Kreis (16) zur Erzeugung dieses Signals in Abhängigkeit vom Wert der Impedanz L gebildet wird, der eingangsseitig zum einen die Sekundärspannung u eines an die Klemmen des Schaltkreises (1) angeschlossenen Spannungstransformators (18) zugeführt erhält und zum anderen die Zündungsimpulse (θ) empfängt, wobei die Spannungs- und Stromtransformatoren (18 und 30) so berechnet sind, daß die beiden Signale die Stromabbilder des Schaltkreises im gleichen Verhältnis darstellen.

2. Anordnung nach Anspruch 1, dadurch gekennzeichnet, daß der Kreis (16) zur Erzeugung des Abbildsignals des Stromes einerseits einen Integrierkreis (17) mit Verstärkungsfaktor 1/L, der eingangsseitig die Sekundärspannung u empfängt und dessen Ausgang (19) das zweite Signal an das Differentialrelais (15) liefert, und andererseits einen Kreis zur Erzeugung eines Nullsetzungssignal für den Integrierkreises aufweist, der einen Detektor mit positivem Schwellenwert (21) und einen Detektor mit negativen Schwellenwert (22) aufweist, welche parallel mit dem Ausgang (19) des Integrierkreises verbunden sind, wobei der Ausgang (23) des Detektors mit positivem Schwellenwert and den Eingang R einer ersten Kippstufe (25) vom Typ RS und der Ausgang (24) des Detektors mit negativem Schwellenwert an den Eingang R einer zweiten Kippstufe (26) vom Typ RS geschaltet ist, während der Eingang S jeder Kippstufe die Impulse (θ) empfängt und der Ausgang Q jeder Kippstufe je an den einen der beiden Eingänge eines logischen NICHT-ODER-Kreises (27) angeschlossen ist, dessen Ausgang (28) mit dem Nullsetzungseingang (20) des Integrierkreises verbunden ist.

# FIG.1

# FIG.2

# FIG.3